# EUROPEAN PATENT APPLICATION

(11) **EP 1 160 754 A2**
(43) Date of publication of application: **05.12.2001**
(21) Application number: 01303887.2
(22) Date of filing: 27.04.2001
(51) Int. Cl.: G09B 19/04, G09B 17/00

(54) **Computer based literacy system**

(30) Priority: 28.04.2000 GB 0010450
(71) Applicant: RESEARCH MACHINES PLC, Milton, Abingdon, Oxon OX14 4SE (GB)
(72) Inventor: Noonan, Claire-Louise, Winchester, Hampshire S023 9QD (GB); Edwards, Karen Dawn, Bicester, Oxon (GB)
(74) Representative: Loveless, Ian Mark

(57) **Abstract**

A computer system for facilitating literacy teaching includes a phoneme-grapheme correspondence store which stores relationships between phonemes and graphemes in a chosen language. The system also includes a word store and means for associating entries in the phoneme-grapheme correspondence store with entries in the word store. A query engine can compile subsets of words corresponding to one or more specified phoneme-grapheme correspondences. This allows a teacher using the system, or a system linked to the embodying system, to extract lists of words which may be suitable for teaching certain phoneme-grapheme relationships. A useful tool for teaching the relationship between written and spoken words is thereby provided.

## Description

### FIELD OF THE INVENTION

The present invention relates to a system for improving linguistic teaching, in particular for primary school-children.

### BACKGROUND TO THE INVENTION

For several years there has been mounting concern about literacy standards, and the best ways of teaching literacy to young children, in English-speaking countries throughout the world, not least in the UK. This has led to extensive debate and experimentation, often concerning the teaching of phonics and how that can be balanced with the necessity to draw children into meaningful and enjoyable literacy activities as early as possible. In the same period there has been interest and innovation in increasing parents' involvement in the teaching of literacy, in developing programmes to help children having difficulties in learning to read and write, and in devising teaching approaches for classes up to 30 which make the most efficient use of limited resources, particularly teachers' time.

In England, a development of major significance has been the government's National Literacy Strategy. Its aim is that "by 2002, 80% of all 11 year olds will reach the standards expected of their age in English, (i.e. Level 4) in the Key Stage 2 National Curriculum tests" (Literacy Task Force, 1997). Five years beyond that, the aim is to achieve 100%. In 1996 the proportion of eleven-year-olds reaching Level 4 was 58%. In 1997, 1998 and 1999 it was 63%, 65% and 70% respectively. The trend is clearly in the direction sought but there is some way to go.

The means for achieving the target include requiring schools to produce 'literacy action plans', new responsibilities for LEAs, modifying the National Curriculum in other subjects from 2000, more literacy in initial teacher education and teacher professional development, parent involvement (home-school contracts, 20 minutes daily reading with children, family literacy projects), Summer Literacy Schools, initiatives in secondary schools, and a National Year of Reading, 1998-99. However, probably the two most important means adopted by the NLS have been the introduction into all primary schools in the country of the 'Literacy Hour' and the 'Framework for Teaching'.

The Literacy Hour is a daily lesson structured in four parts (10-15 minutes of whole class work with shared text; 10-15 minutes of whole class word or sentence work; 25-30 minutes of group activities; 5-10 minutes of whole class review/sharing/evaluating). The Framework for Teaching specifies in considerable detail the programmes of work to be carried out in each term of each primary school year in relation to three levels - text, sentence and word. It also indicates word lists to be learnt, detailed planning and monitoring procedures. The Framework has been supplemented recently by extra material on phonics and support for children having difficulties. As the 2002 deadline draws closer, and the search for effective methods of literacy teaching intensifies, additional features may be added to the Literacy Hour and the Framework.

We have appreciated that a Literacy Programme should be clearly linked to the National Literacy Strategy, particularly to the Framework, to most effectively improve literacy standards.

The potential contribution of computer based systems to the teaching of literacy, has not yet been fully appreciated. Many have hitherto assumed that computer-based teaching programmes can only contribute to the learning of a limited range of skills, and then only in a very restricted way (e.g. through tedious exercises in which children do not say anything, hear very little, and have no opportunities to write). Our belief is that computer based systems open up the possibility of richer computer-aided learning experiences for young children. These will not substitute for class teaching but can very powerfully complement it. In addition, a switch to Internet delivery, will make it easier for schools and teachers to explore the potential of a computer based system without a large initial outlay. The same technology means that families could access such programmes at home, either through some kind of home-school arrangement or quite independently.

We have appreciated the challenge to produce a programme which is both technically and educationally sophisticated.

It is necessary to discuss the meaning of 'literacy' before considering the invention. The National Literacy Strategy Framework for Teaching distinguishes three levels of literacy to be taught - word, sentence, and text. We recognise these three but, find it helpful to note two more as follows.
1. Purpose
2. Text
3. Sentence
4. Word
5. Sub-word

Learning literacy means eventually being able to deal with all levels, usually simultaneously. Children need experiences from which they can learn the *purposes* of literacy - for communicating and understanding meaning, for enjoyment or pleasure, for making things happen in the world, and so on. Genuine literacy activities (as opposed to teaching activities) involve *texts* whether these be novels, poems, scientific reports, road signs or shopping lists and children need to learn how certain features of texts link to purposes. At the level of *sentences* children have to understand the conventions of grammar and punctuation which make it possible to follow texts. At the *word* level children need to be able effortlessly to recognise familiar words effortlessly in reading and to decode unfamiliar ones. The *sub-word* level of literacy, which concerns knowledge of how parts of written words relate to sounds in spoken language and to whole words, is needed for encoding (i.e. spelling) and decoding (i.e. reading) words before they are known automatically.

We have appreciated that, ideally, teaching should relate to all levels as early as possible. Many teaching methods, however, concentrate on just one or two. For example approaches which insist that children are taught phoneme awareness and phoneme-grapheme correspondences before anything else are giving priority to the sub-word (level 5). At the other extreme would be total reliance on engagement with storybooks (focusing on levels 1 and 2). Few would dispute, however, that in the end users of written language need competence at all levels.

There are specific skills to be learned at all levels - but perhaps most obviously at levels 4 and 5. Sometimes it is possible to conceptualise these hierarchically - for example, to learn how to encode a particular phoneme into its written form one must first have learned to distinguish it in speech. Compared, say, to mathematics, literacy skills and their hierarchies are difficult to identify but insofar as it is possible it is desirable to use that as a basis for teaching.

### SUMMARY OF THE INVENTION

We have appreciated the need to implement a computer based literacy teaching system in an effective and extendable way. In particular, we have appreciated the technical; problem of developing such a system to allow variations in teaching programmes but with a consistent methodology.

Accordingly, in a broad aspect the invention provides a system which stores phoneme-grapheme correspondences for use in computer based teaching programmes. In particular, the invention provides a system according to claim 1 to which reference is directed.

An advantage provided by the invention is that a computer based programme can link with, and be integrated with, the system according to the invention to provide a consistent approach to teaching phoneme-grapheme correspondence.

This aspect of literacy teaching in which we have appreciated that a computer can aid learning is called phonics. This is the explicit teaching of how sounds in speech can be represented by graphemes. We have appreciated that the most coherent phonics approach is to teach phoneme-grapheme correspondences.

One area of controversy in literacy teaching is the importance to be given to rhyme. There is research evidence that children who are able to recognise 'rimes' (the endings of words which rhyme with other words, as in 'bring' and 'string') find learning to read significantly easier. Some have recommended that children should therefore be taught to recognise rimes and how they are encoded. The opposite view is that this means children having to learn another, complicated set of associations in addition to phoneme-grapheme correspondences and that children are likely to become confused about what counts as a 'sound' in speech and what are the essential graphemes for encoding sounds.

We have appreciated that it is desirable for the children to learn an awareness of rimes and how they are encoded, but that this should be achieved by teaching phoneme-grapheme correspondences first. After these are well established, children can be taught that some phonemes often come together in chunks and that such chunks have common graphemic forms (e.g. <I> + <n> + <g> is represented by 'ing').

Accordingly, a preferred embodiment of the invention includes a store of phoneme-grapheme correspondences which can be queried to derive rimes.

A problem with teaching phoneme-grapheme correspondences (whether or not they figure in rimes) is that they focus children's attention only on the word and sub-word levels of literacy. Taken to excess this approach denies them the opportunity to learn higher levels of literacy. Indeed, one of the most common criticisms of phonics is that it can turn children off literacy by making the whole thing meaningless (a particular risk for children coming from homes where there is limited literacy).

Fortunately, there is another aspect of literacy which is quite different from phonics and which we have appreciated is particularly suited to computer-aided learning, which is poetry. Poetry is an important part of the literacy curriculum (recognised as such traditionally and in the NLS Framework). Poetry is one of the purposes for literacy which we expect children to understand (i.e. it relates to the one of the higher levels of literacy). It also relates to the word and sub-word levels. It can both complement and reinforce learning at those levels.

In summary, we have appreciated the technical problem of using a computer based system to teach children: to distinguish phonemes in speech, to encode them into graphemes, to decode graphemes into phonemes starting with the most common; to have a phoneme-based awareness of rhyme and analogy; and to enjoy poetry, including word and sub-word features of some poems. These technical problems are addressed by the invention as discussed above.

An embodiment of the invention allows these selected aspects of literacy to be taught in a computer based system in an integrated fashion. Children will have a varied and balanced exposure to each and, wherever possible, we will make links between what is learned in relation to one aspect (e.g. word endings which rhyme) and another aspect (e.g. a poem using the same rhyme). To reflect this intertwining we refer to learning at sub-word, word (rhyme/analogy) and poetry text levels as strands of the programme.

### BRIEF DESCRIPTION OF THE FIGURES

An embodiment of the invention will now be described, with reference to the accompanying figures, in which:
- Figure 1:: is an overview of the functional components of the system;
- Figure 2:: is a graphical representation of the functional components of Figure 1 shown in greater detail;
- Figure 3:: is a graphical representation showing the word store and PGC store in greater detail;
- Figure 4:: is a graphical representation of the word store;
- Figure 5:: is a graphical representation of the PGC store;
- Figure 6:: is a screen shot showing how PGC relationships may be entered into the system;
- Figure 7:: is a graphical representation of the data store linking the word store and PGC store;
- Figure 8:: is a graphical view of one aspect of a teaching system;
- Figures 9 & 10:: are graphical views of a query engine; and
- Figures 11 & 12:: are graphical views of a direct interface.

### DESCRIPTION OF A PREFERRED EMBODIMENT

To understand the embodiment, it is first necessary to discuss some linguistics. Phonemes are the smallest units of sound in a language which (by addition, removal or substitution) can change one word into another word or into a non-word. For example, the word 'cat' consists of three phonemes (<c> plus <a> plus <t>). If the phoneme <c> is removed we hear 'at'; if it is substituted by <b> we hear 'bat'. There are around 44 phonemes in standard English. Phonemes are represented in writing by 'graphemes'. Unfortunately, as there are only 26 letters in the English alphabet, some phonemes have to be represented by combinations of letters, e.g. the sound which begins the word 'that' is represented by the two-letter grapheme, 'th'. To make matters worse, most phonemes have several alternative graphemes, and many graphemes represent more than one phoneme (thus the phoneme <c> can be also represented by the grapheme 'k' and the grapheme 'c' sometimes represents the <s> phoneme as in 'cider'). This is what makes learning to read and write in English so difficult. Nevertheless, if the most common phoneme-grapheme correspondences (PGCs) can be taught to children they have an excellent basis for encoding speech into letters (i.e. writing) and decoding writing into speech (i.e. reading).

We have devised an optimal order in which PGCs should be learned. The embodiment exploits computer technology to teach PGCs, and their use in words, individually to children in ways in which a class teacher could never do.

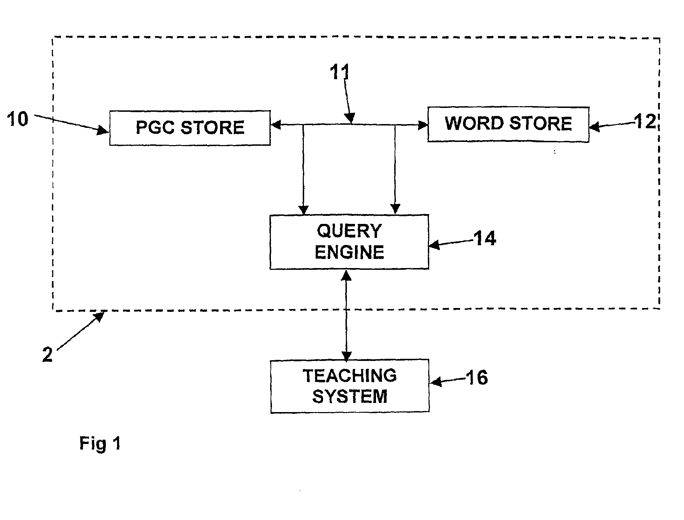

A system 2 embodying the invention is shown in Figure 1. The system comprises a phoneme-grapheme correspondence store, PGC store 10, which stores phoneme-grapheme correspondences for the most frequent 1000 words found in childrens texts. Associated with the PGC store 10, is a word store 12, arranged to store the most frequent 1000 words found in child texts and linked to the PGC store 10 to allow analysis. The analysis of PGC store 10 and word store 12 is undertaken by a query engine 14 which links to a teaching system 16. It is the query engine 14 in cooperation with the PGC store 10 and word store 12 of the system 2 which provides great advantages of flexibility and adaptability. The PGC store 10 and word store 12 are linked by a data store 11 as will be described later.

In the preferred embodiment, the system 2 comprising the PGC store 10, word store 12 and query engine 14 are constructed using Microsoft Access on a Windows computer system, but other software/hardware choices may be appropriate.

One problem is deciding which PGCs to teach, and in what order. We have studied the 1000 most common words taken from children's literature and analysed their PGCs. We have identified over 200 PGCs but found that many are extremely rare and the most common PGCs account for the majority of the words. This indicates which PGCs it is most valuable for children to learn and what order would have the greatest utility in terms of encoding, decoding and therefore reading and writing. It also shows which are the most common ways of representing specific phonemes.

The embodiment adopts the following criteria for deciding on the optimal order for teaching PGCs:
I. Letter formation: Physical letter formation patterns need to be taught correctly and they help children to remember the phonemes corresponding to graphemes. Initial phonemes have been chosen for their commonness in letter formation.
ii. Word building: It is important that children learn as early as possible that spoken words can be built out of phonemes and that they can be written using graphemes. Therefore the teaching of vowels cannot be delayed.
iii. Simplicity: The most simple grapheme-phoneme correspondences (e.g. 1:1 correspondences) should be taught first.
iv. Probability: When the above criteria have been met, it is desirable to teach phoneme-grapheme correspondences in the order of greatest utility for encoding and decoding (i.e. the most common PGCs first).

Clearly, word and sub-word strands of the programme are about teaching certain skills. It is not possible, however, to produce a definitive list of all skills involved in knowing PGCs but we find it convenient, for pragmatic purposes, to identify 12 sub-word skills and to group them into four main clusters (SW1, sounds; SW2, phonemic awareness; SW3, encoding; SW4, decoding).

We have devised activities to teach each of these skills. For example, to teach phonemic awareness there is an activity which presents children with a stimulus phoneme and requires them to identify it among three phonemes that they hear (e.g. by picking which character on screen 'says' the right phoneme). We call these Generic Activities because they can be used for teaching any phoneme. When an activity is used to teach a specific phoneme (e.g. <t>) we call it a Specific Activity.
To maintain children's interest the same activity will be presented in a variety of different contexts. For example, in one context the child might pick from a tree the piece of fruit which bears a target letter but in another context the choice might be floating balloons to prick. It is possible for a child to be presented with the same Specific Activity in more than one context.

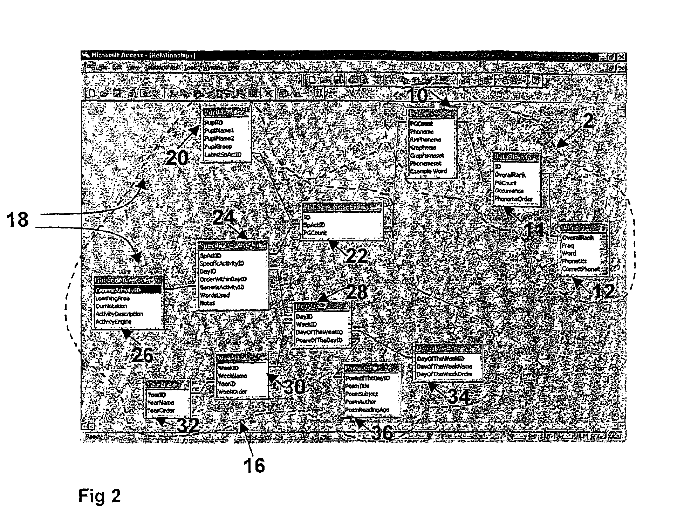

One possible teaching system is shown in greater detail in Figure 2. As shown, the teaching system 16 comprises a collection of data tables 18, each providing data relevant to a teaching programme and so configured as to allow a teaching programme to be presented. In particular, Pupil Data 20 is provided to allow tracking of a pupil's progress. This links to a table 22 (PGC Specific Activity Data) that provides a unique identifier existing for each activity within the programme. This unique identifier provides information relating to the PGC store 10. Specific Activity Data 24 provides data on activities within the programme and links to Generic Activity 10 and data relating to Daily Data 28, Week Data 30, Year Data 32 and to Days of the Week Data 34 and Poems Data 36. Together the various data table 18 within the teaching system 16 provide the possibility to configure a teaching programme which can interface with a query engine 14 as shown in Figure 1.

As stated earlier, an embodiment could teach children about words which rhyme (thereby teaching them awareness of rimes) and will do this by building up knowledge of how sets of phoneme-grapheme correspondences are commonly found together at the ends of words.

### The PGC store 10 is derived as follows:

Information relating to the frequency and occurrence of phoneme-grapheme correspondences (PGCs), we have appreciated, would be valuable in informing the teaching of reading. The PGC store 10 was developed as a database in order to extract accountable data to show these frequencies. This data will provide a sound scientific basis for a subsequent educationally-sound Literacy product. This data informs our curriculum and teaching. The PGC frequency data will diffuse the current uncertainty about the order in which to teach PGCs to young children (approx. age 4-7 yrs.) and will inform both our curriculum and others. This data can link to a teaching system 16 as shown in Figure 1. This system could easily be made available to a wider audience by means of a web site allowing users to search the database. One instance of this may be that this facility would allow teachers to find example words that contain specific PGCs and to structure their teaching accordingly.

A process has been devised to deduce the most probable PGCs that a child will encounter during the reading of children's texts. This process initially involved the analysis of frequencies of words in primary aged children's texts. Graphs were plotted of frequency values for all words encountered in these texts. As a result of these graphs a decision was made to perform a detailed analysis of the 1000 most frequent words from the texts.

Proper nouns and some other words were excluded. Each of the words was analysed for PGCs. A decision was made to use Received Pronunciation and a dictionary was used to aid in this part of the process. Statistical analysis of the PGCs per word has enabled us to generate data to inform the order of teaching PGCs in our literacy curriculum. This statistical analysis will also enable us to generate appropriate word lists for individual pupils relevant to their PGC knowledge base.

All data is born from the results of a study of the 1000 most frequent words found in children's books, by the British National Corpus. The BNC compiled this data from several texts which they considered to be representative of children's literature. Each word was assigned a frequency value according to how many times it appeared in the selected texts.

The 1000 most frequent words did not contain any proper nouns, but they did contain nouns such as 'cat' and 'dog'. The BNC included morphemic units in their original lists as well (such as 's' or 'ed'). Again, these were replaced with words from further down the list. All identifiable PGCs in the public domain were then entered into the database. These were added to and/or revised as required during the analysis. The phoneme-grapheme correspondences present in each of the 1000 words were identified. The Oxford English Dictionary acted as a Received Pronunciation reference during this task.

At all times Received Pronunciation was taken to be the basis for defining the phonetic transcript of 'problem' words. This was due to the fact that the data could never account for all phonetic variations in pronunciation. For example, differences arising from regional accents could not all be covered and so a basis for analysis had to be decided upon. In the same way, American/Australian variations in pronunciation could not be accounted for. Neither could differences arising from speakers of English as an additional language.

Certain linguistic issues arose as the analysis took place - for example, how we were to deal with the schwa sound. Issues of PGC continuity between similarly structured words were also considered here, in order that the future extrapolated data would not be slewed in any way.

The data in turn informed a curriculum which provides the opportunities for both accurate and repetitive teaching of PGCs, within a greater context of PGC-appropriate whole words. Teaching can also be tailored to the individual learner by means of assessing their responses and interactions, and adjusting the activities accordingly.
In this way the curriculum is differentiated. The teacher with information about which PGCs a child has learnt, will be able to retrieve a list of words (from the 1000 highest frequency words) that the child should possess the skills to read.

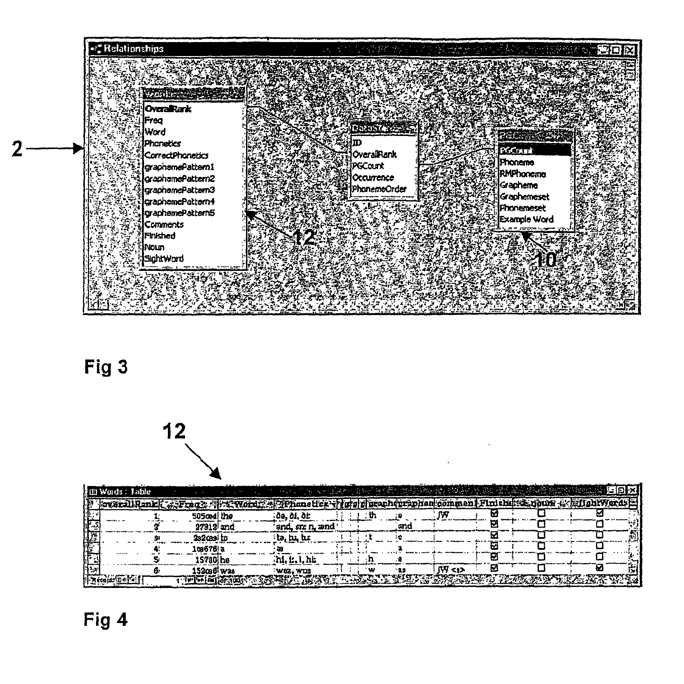

The system 2 embodying the invention is shown in greater detail in Figure 3. This figure shows the relationships present in the database. The table "Words" 10 contains information that pertains to the top 1000 words that were chosen for analysis. Information stored in the table words includes: the word itself, it's frequency value (the number of times the word appeared in the BNC corpus of 45 child texts), suggested phonetic transcripts for the word, grapheme patterns in the word and further flags to aid in our study - comments, whether the analysing of the word is finished or not, whether the word is a noun and whether it could be considered as a sight word or not. The table representing the word store 12 is shown in greater detail in Figure 4.

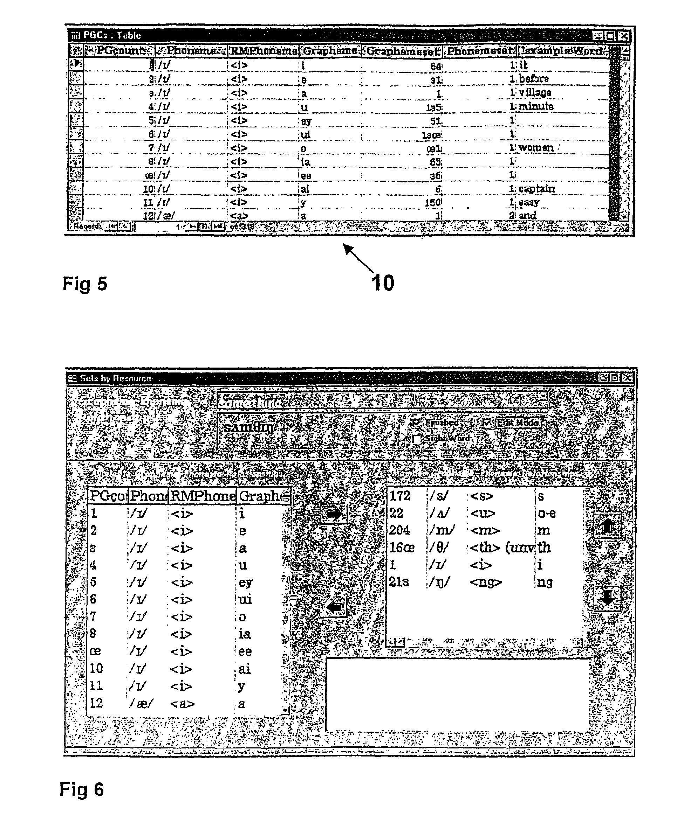

The phoneme-grapheme correspondences are stored in the PGC store 10 as a table and this table is shown in greater detail in Figure 5. The table "PGC" contains the maximum list possible of phoneme-grapheme correspondences. Each PGC entered was given a specific ID (PGCount). Grapheme sets and Phoneme sets were created to enable data retrieval of information relating to similar graphemes and phonemes.

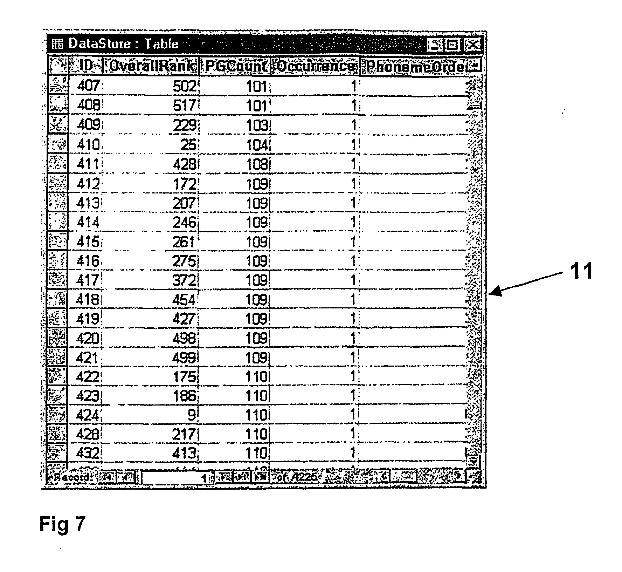

The link between the word store 12 and PGC store 10 is made by a data store 11, as will now be described with reference to Figures 6 and 7. The table "Data store" holds information that links the word store 12 and PGC store 12. This relates to which PGCs are assigned to each word. Figure 6 is an illustration of the form that was used for entering the PGCs related to each word. Each PGC is stored with a unique ID (PGC ID) and each word is stored with a unique ID (word ID). This allows the data store 11 to uniquely relate PGCs to words, as shown in Figure 7.

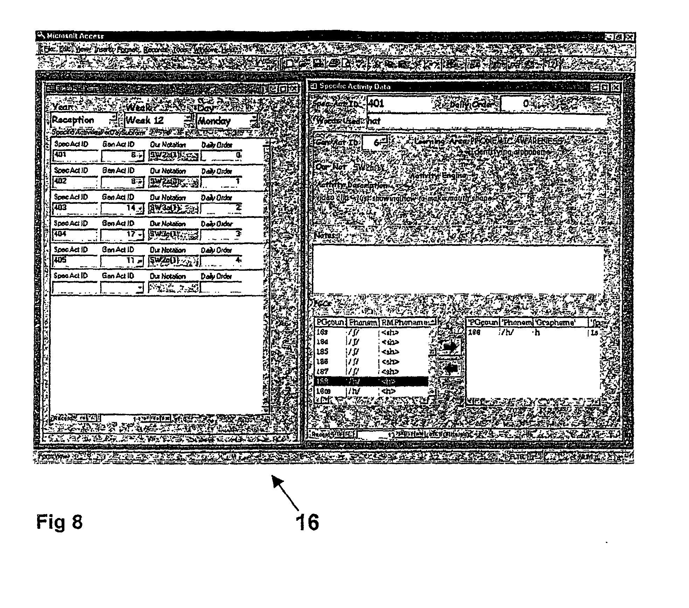

The integration of the teaching system described with the system of Figures 1 to 7 will now be described with reference to Figures 8 to 10.

One aspect of a teaching system 16 is shown in Figure 8. The teaching system 16 stores extra information pertaining to each child's position in the product - for our purposes this may be the SpActID - a unique identifier for each activity in the product. Performing a query related to this information we then gather information on all previous activities that the child has succeeded in and thus a list of PGCs that they have learnt. Figure 8 shows the "Teaching system" database. Here you can see how the relationship <h> ↔ "h" is stored for the specific activity 401 for the day in question. In this way, every activity is assigned a unique identifier, and relates to teaching one or more specific PGCs. In addition, an "order number" is stored for each PGC a child has learnt which relates to the place in the curriculum where the individual child has learnt that PGC.

In use, the teaching system links to the word store and PGC store through a query engine 14.

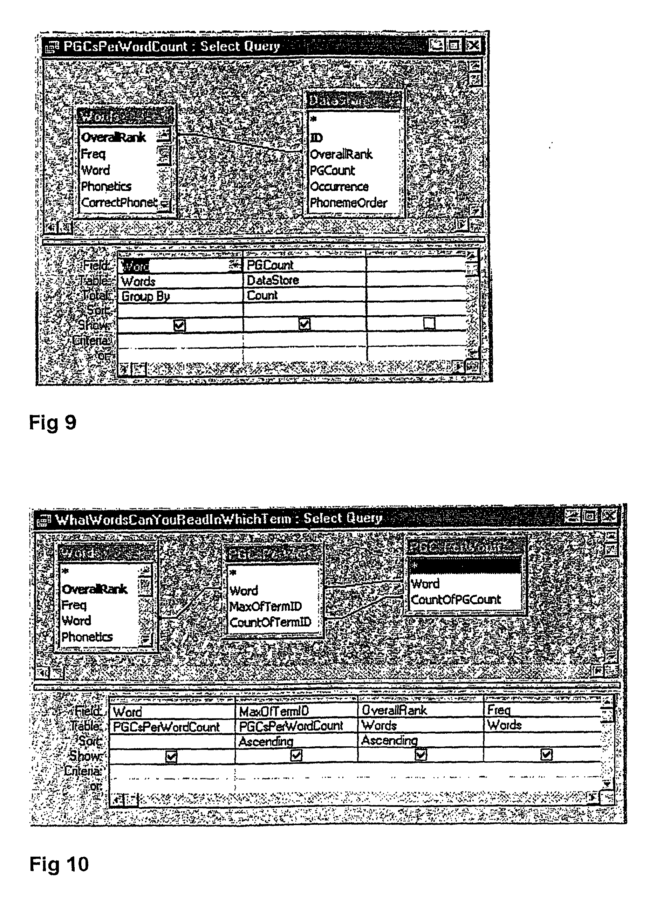

The query engine 14 works in three stages as shown in Figures 9 and 10. First it takes each word in the word store 12 list and deciphers the number of PGCs present in each word.

The second stage looks at the PGCs that a child has learnt and extracts the order number for each PGC which denotes the relative position in the curriculum that the child attains an understanding of the PGC. For each word in the database each component PGC is analysed. If a PGC in a word is contained in the list of PGCs that the child has learnt then the order number relevant to the point in the curriculum that the PGC was taught is stored. This process is repeated for each PGC in the word. The total number of PGCs that the child knows in that precise word is then calculated by summing. If a word contains a PGC that the child has not learnt then the value stored is that for the previous PGC in that word that is in the child's learned PGC list for completeness.

The second stage relates to the fact that each PGC in the database has a unique ID. For each word in the database, each component PGC is analysed. For example, the word wine, the PGCs are <w>w, <ie> i_e and <n>n. Each of these three PGCs has an order number which is derived from the place in the curriculum where an individual child has learnt that PGC. For example, the word wine contains the PGC <w> which has an order number of 12, <ie> i_e, which has an order number of 17 and <n>n which has an order number of 10. This tells us that the PGC <ie> i_e is the last of these to be learnt. Therefore, the word wine has an order number of 17.

In the final stage - the system compares the number of PGCs present in a word (calculated at step 1) to the number of PGCs in that word that the child knows.
Whenever these values are the same, then the "order number" is retrieved. This "order number" relates to the first point in the curriculum that the child could possibly read the word. As a result, a list of words is produced along with the order number for each word which can be related to an activity.

In this way, a list of words that a child should know is generated, along with an indication of the first point in the curriculum that the word could be known. In this way, the teacher can see a history of which words were learnt at any given point in the curriculum. For example, they could see a list of words which the child had learnt in the previous 6 weeks, rather than simply seeing the entire list of words that the child can read.

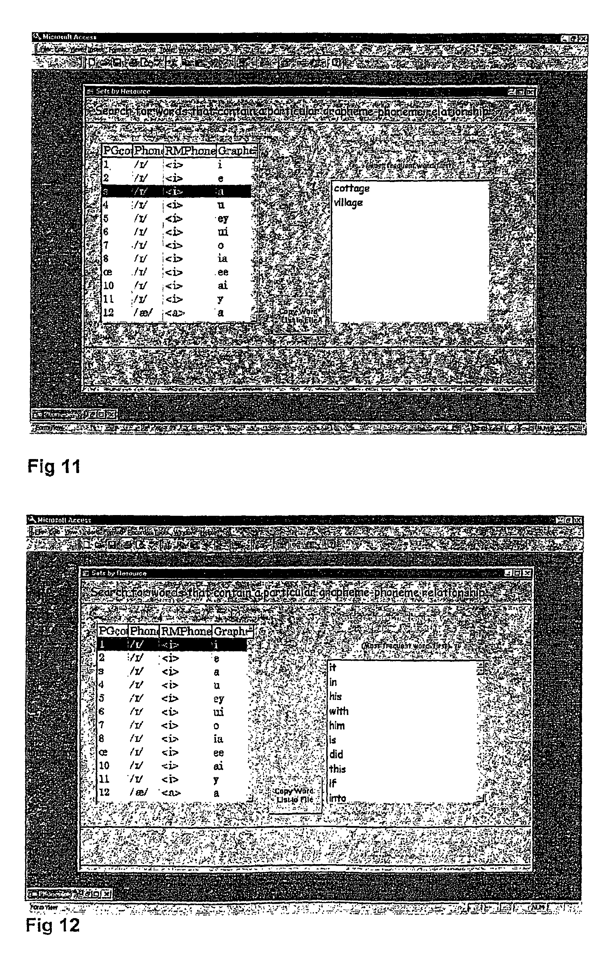

In addition to using the system embodying the invention with a teaching system, a teacher may wish to query the PGC/word data stores direct, and for this purpose an interface is provided as shown in Figures 11 and 12.

## Claims

1. A computer system for facilitating literacy teaching accessible direct by a user or within a computer based teaching programme, comprising:
a phoneme-grapheme correspondence store configured to store relationships between phonemes and graphemes of a chosen language;
a word store configured to store a set of words of the chosen language;
means for associating entries in the phoneme-grapheme correspondence store with entries in the word store;
a query engine arranged to communicate with the phoneme-grapheme correspondence store and word store to allow compilation of subset groupings of the set of words corresponding to one or more specified phoneme-grapheme correspondences; and
an interface for providing the subset groupings of the set of words to a user or a computer based teaching system.

2. A computer system according to claim 1, wherein the query engine comprises means for searching for a specified phoneme-grapheme correspondence within the phoneme-grapheme correspondence store, and means for extracting the subset grouping of the set or words including that phoneme-grapheme correspondence.

3. A computer system according to claim 1, wherein the query engine comprises means for searching for a plurality of specified phoneme-grapheme correspondences together comprising a rime within the phoneme-grapheme correspondence store, and means for extracting the subset grouping of the set or words including that rime.

4. A computer system according to any preceding claim, further comprising a computer based teaching system, the teaching system including an activity identifier store for storing a unique identifier for each activity within the system, the query engine being further arranged to derive from the unique identifier a list of words containing PGCs known as a result of the identified activity.

5. A computer system according to claim 4, wherein the query engine is arranged to:
- derive from the unique identifier a list of PGCs and the order in which the PGCs are presented within the teaching system;
- compare the list of PGCs to the set of words in the word store; and
- derive from the comparison a list of words containing PGCs known as a result of the identified activity and the earliest point that each word is known within the teaching system.
